# EUROPÄISCHE PATENTSCHRIFT

(11) **EP 2 260 922 B1**
(45) Veröffentlichungstag und Bekanntmachung des Hinweises auf die Patenterteilung: **31.08.2011**
(21) Anmeldenummer: 09006520.2
(22) Anmeldetag: 14.05.2009
(51) Int. Cl.: B01D 53/14, B01D 53/50

(54) **Sulfit/Sulfat-Oxidations-Beschleuniger-Einheit**
Sulfite/sulfate-oxidation accelerator unit
Unité d'accélérateur d'oxydation sulfite/sulfate

(43) Veröffentlichungstag der Anmeldung: 15.12.2010
(73) Patentinhaber: AE & E Lentjes GmbH, 40880 Ratingen (DE)
(72) Erfinder: Kehrmann, Kai Matthias, 44629 Herne (DE); Brass, Manuel, 44579 Castrop-Rauxel (DE)
(74) Vertreter: Becker, Thomas

(56) Entgegenhaltungen:
- EP-A1- 0 786 282
- US-A- 5 525 223
- US-A1- 2006 163 137
- Prof. Blume/Dagmar Wiechoczek: "Modellversuch zur Chemisorption von Schwefeldioxid an Aktivkohle" Internet 3. Januar 2005 (2005-01-03), XP002548257 Gefunden im Internet: URL:http://www.chemieunterricht.de/dc2/abg as/abgas07.htm> [gefunden am 2009-09-29]
- Gopala Krishna, K V: "Aqueous Phase Oxidation Of Sulfur Dioxide In Stirred Slurry Reactors" Internet 21. Juni 2006 (2006-06-21), XP002548258 Gefunden im Internet: URL:http://biblioteca.universia.net/ficha. do?id=5803493> [gefunden am 2009-10-01]

## Beschreibung

Die Erfindung betrifft eine SO₃²⁻/SO₄²⁻-Oxidations-Beschleuniger-Einheit in Seewasser von Rauchgasentschwefelungsanlagen.

Eine Rauchgasentschwefelungsanlage, die mit Seewasser als Absorbens arbeitet, um Schwefeldioxid aus einem Abgas zu entfernen, ist beispielsweise aus der EP 0 756 890 B1 bekannt. Das bei dieser Rauchgaswäsche im Absorbens gebildete Sulfit muss anschließend in Sulfat umgewandelt werden, bevor das Seewasser wieder in das Meer zurückgeführt wird.

Die Geschwindigkeit zur Oxidation von Sulfit zu Sulfat ist pH-Wert abhängig. Bevorzugt ist ein Bereich zwischen pH 5,5 und pH 6,5. Da der pH-Wert des Seewassers nach der Kontaktierung mit dem Rauchgas deutlich niedriger liegt, ist es bekannt, frisches Seewasser mit einem pH-Wert von beispielsweise ca. 8 zuzumischen, um den pH-Wert insgesamt anzuheben.

Daraus resultiert eine entsprechende Erhöhung des Volumenstromes im anschließenden Belüftungs-/Oxidations-Schritt. Teilweise steht auch nicht genügend frisches Seewasser zur Beimischung zur Verfügung.

Die US 2006/0163137 A1 offenbart einen Filter in Rohrform, in dem ein Aktivkohle-Granulat in Mischung mit Plastik Pellets konfektioniert wird, wobei das zu filternde Fluid in Axialrichtung durch das Rohr hindurchgeleitet wird. Das gilt ebenso für die Anordnungen gemäß US 5,525,223 und XP-002548257.

Die Erfindung geht von der Grundidee aus, die notwendige Oxidationsreaktion von SO₃²⁻ zu SO₄²⁻ katalytisch zu beschleunigen und hierfür eine entsprechende Beschleuniger-Einheit zur Verfügung zu stellen.

Grundsätzlich wäre es zwar möglich, eine auf die Oxidation katalytisch wirkende Substanz im betroffenen Seewasser-Strom zu dispergieren. Hierdurch ließe sich die Oxidationsreaktion auch erheblich beschleunigen. Nachteilig wäre jedoch der hohe Verbrauch und die damit verbundenen Kosten an Katalysator.

Das Grundkonzept der Erfindung besteht deshalb darin, eine Beschleuniger-Einheit zur Verfügung zu stellen, die stationär im Seewasser-Strom platziert und vom Seewasser umströmt und durchströmt werden kann.

In ihrer allgemeinsten Ausführungsform betrifft die Erfindung eine SO₃²⁻/ SO₄²⁻-Oxidations-Beschleuniger-Einheit in Seewasser von Rauchgasentschwefelungsanlagen, mit den Merkmalen des Anspruchs 1.

Die einzelnen Merkmale lassen sich wie folgt konstruktiv und funktional näher beschreiben und präzisieren:
Der Beschleuniger wird als dreidimensionaler, vom Seewasser durchströmbarer Körper gestaltet, wobei der Körper selbstverständlich eine entsprechend große Oberfläche bereitstellen soll, die mit dem Seewasserstrom in Kontakt treten kann.

Damit die Körper nicht aufschwimmen oder weggespült werden, sieht die Erfindung eine vom Seewasser durchströmbare Umhüllung für die Körper vor. Dabei werden vorzugsweise mehrere der genannten Körper in einer gemeinsamen Umhüllung konfektioniert. Der Seewasserstrom führt also durch die Umhüllung auf und in die Körper, von und aus den Körpern wieder heraus und schließlich aus der Umhüllung wieder in den regulären Seewasserstrom.

Um eine möglichst hohe Standzeit der Einheit sicherzustellen, ist ferner vorgesehen, dass der/die Körper während der bestimmungsgemäßen Durchströmung mit Seewasser ganz überwiegend in der Umhüllung verbleiben. "Ganz überwiegend" bedeutet dabei, dass allenfalls unerwünschte kleinere Verluste durch Abrieb, Beschädigung oder dergleichen in Kauf genommen werden können.

Typischerweise wird die Umhüllung deshalb feinmaschig sein, aber auch nicht zu feinmaschig, um die freie Durchströmbarkeit nicht zu beeinträchtigen. Typische Konfektionierungen für die Umhüllung sind: Gewebe, Gewirke, Netze, Gitter, Membrane.

Die Umhüllung kann eine definierte geometrische Form wie eine Kugel, Pyramide, einen Kubus oder ein Rohr aufweisen; sie kann aber auch unspezifisch sein, nach Art eines Sacks, in dem ein oder mehrere katalytisch auf die Oxidation wirkende Körper angeordnet sind.

Das Umhüllungsmaterial besteht erfindungsgemäß vor allem aus Kunststoff; es kann aber auch Metall sein.

Für den Körper und dessen Formgebung gilt, dass neben der Forderung einer möglichst großen Reaktions-Oberfläche keine spezifischen Vorgaben bestehen. Die Körper können deshalb beispielsweise in Form von Kugeln, Pellets, Pyramiden, Granalien, Stäben, Eiern oder Sternen gestaltet sein. Damit wird die Grundform der äußeren Umfangsfläche beschrieben, die aber auch unspezifisch sein kann, beispielsweise dann, wenn die Körper aus einem gebrochenen Material bestehen. Die Körper können dann beispielsweise eine Art Splittform aufweisen.

Da der Körper die katalytisch aktive Substanz bildet, die beispielsweise Aktivkohle sein kann, sind die Körper vorzugsweise mit hoher offener Porosität ausgebildet, was zu einer überströmbaren Oberfläche von > 200 m²/g führen kann, auch Werten über 500 m²/g oder über 1.000 m²/g.

Beispielsweise bei einer Würfelform kann dann die innere Oberfläche die äußere Oberfläche um einen Faktor von > 10.000 übersteigen.

Aktivkohle basiert beispielsweise auf Steinkohle, Braunkohle, Holz oder Kokosnussschalen. Sie wird deshalb auch als Pflanzenkohle bezeichnet. Die Herstellung erfolgt beispielsweise durch Behandlung mit Dehydratisierungsmitteln bei 500 bis 1.000° C oder durch trockene Destillation. Die so erhaltene Rohaktivkohle wird anschließend bei 700 bis 1.000° C mit Wasserdampf oder Kohlendioxid aktiviert. Sie kann als so genannte Kornkohle oder durch Vorbehandlungen zu Granalien oder Pellets geformten dreidimensionalen Körpern eingesetzt werden. Typischerweise weist der einzelne Körper eine Größe von über 0,5 cm³ auf, wobei dieser Wert auch > 1,5 cm³, > 3 cm³, > 5 cm³ betragen kann.

Wichtig ist die Abstimmung der offenen Porosität und inneren Oberfläche in Abhängigkeit von der notwendigen Durchströmbarkeit.

Im Rahmen der Erfindung wird eine Einheit vorgesehen, bei der mehrere Umhüllungen mit den darin konfektionierten Körpern in einer gemeinsamen, vom Seewasser durchströmbaren Aufnahme so angeordnet werden, dass die Umhüllungen während der bestimmungsgemäßen Durchströmung von Seewasser ganz überwiegend in der Aufnahme verbleiben.

Bezüglich des Begriffes "ganz überwiegend" gelten vorstehende Ausführungen hier analog. Die Aufnahme dient dazu, mehrere Umhüllungen, das können mehrere hundert, mehrere tausend, aber auch mehrere zehntausend Umhüllungen sein, gemeinsam aufzunehmen und so eine Art "Festbett" bereitzustellen, durch welches der Seewasserstrom hindurchgeführt wird.

Die Aufnahme selbst kann beispielsweise durch Auswahl entsprechender Materialien so gewählt werden, dass sie auf dem Boden eines Belüftungsbeckens steht oder dort befestigt wird.

Eine einzelne Aufnahme kann beispielsweise die Form einer Kugel, eines Kubus, eines Rohrs, eines Zylinders, aber auch eine Sackform aufweisen. Beispielsweise für eine rohrförmige Aufnahme gilt, dass mehrere solcher Rohre mit einer beispielsweise netzartigen Oberfläche zu Rohrbündeln konfektioniert werden können, die dann im Belüftungsbecken so angeordnet werden, dass die Axialrichtung der Rohre der Strömungsrichtung des Seewassers entspricht, aber auch eine Anordnung senkrecht zueinander ist möglich.

Innerhalb dieser Rohre sind dann die Umhüllungen mit den Körpern platziert.

Das Material für die Aufnahme kann Stahl oder ein anderes Metall, aber auch Kunststoff sein. Die Konfektionierung lässt sich wieder als Gewebe, Gewirke, Netz, Gitter, Membran, aber auch als Blech mit Durchströmungsöffnungen ausführen.

Da die Umhüllungen größer sind als ein Katalysator-Körper (beispielsweise in der Größenordnung von 3 cm³ oder darüber, beispielsweise auch > 10 cm³) folgt daraus, dass die durchströmbaren Öffnungen der Aufnahme größer sein können als die durchströmbaren Öffnungen der Umhüllung.

Mehrere solcher Aufnahmen lassen sich, wie ausgeführt, zu einem kompletten Einbausatz konfektionieren. Dieser Einbausatz kann wiederum am Boden eines Belüftungsbeckens einer Rauchgasentschwefelungsanlage befestigt werden. Er kann im Belüftungsbecken aber auch beispielsweise durch Niederhalter unter der Wasseroberfläche gehalten werden. Möglichkeiten zeigen die nachfolgenden Ausführungsbeispiele.

Es kann vorteilhaft sein, zwischen einzelnen Körpern innerhalb einer Umhüllung und/oder zwischen einzelnen Umhüllungen innerhalb einer Aufnahme Einrichtungen vorzusehen, die benachbarte Körper beziehungsweise benachbarte Umhüllungen auf Abstand halten. Zum Beispiel im Fall der katalytisch aktiven Körper ist dies deshalb von Vorteil, weil dadurch zusätzliche Oberflächen bereitgestellt werden, die sonst nicht nutzbar wären. Darüber hinaus kann die Durchströmbarkeit der einzelnen Körper oder Umhüllungen auf diese Weise verbessert werden.

Eine solche Einrichtung besteht im einfachsten Fall aus einem Element, das benachbarte Bauteile im Abstand hält. Dies können beispielsweise stachelartige Elemente sein, die in einen Körper integriert sind und diesen überragen. Dies können aber auch inerte Elemente sein, die zwischen benachbarten Körpern und/oder zwischen benachbarten Umhüllungen angeordnet werden. Vorzugsweise sind diese Elemente dabei von Wasser nicht durchströmbar ausgeführt, so dass das Wasser an den Elementen umgelenkt wird.

Darüber hinaus besteht die Möglichkeit, die einzelnen Umhüllungen im Abstand zueinander innerhalb einer Aufnahme anzuordnen, beispielsweise im Fall einer rohrförmigen Aufnahme einzelner Umhüllungen mit zugehörigen Körpern im Abstand zueinander an einer netzartigen Zylinderwand eines Rohrs zu befestigen.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher beschrieben. Dabei zeigen, jeweils in stark schematisierter Darstellung:
- Figur 1:: eine käfigartige Aufnahme mit einer darin angeordneten kugelartigen Umhüllung, in der Korn-Aktivkohleteilchen konfektioniert sind,
- Figur 2:: einen Schnitt durch eine kugelartige Aufnahme, in der kugelartige Umhüllungen und kugelartige Inertelemente konfektioniert sind,
- Figur 3:: eine perspektivische Ansicht eines Einbausatzes aus Netzrohren, in denen sackartige Umhüllungen im Abstand zueinander konfektioniert sind,
- Figur 4:: einen Längsschnitt durch ein Belüftungsbecken einer Rauchgasent- schwefelungsanlage mit erfindungsgemäßen Beschleuniger-Einheiten.

In den Figuren sind gleiche oder gleich wirkende Bauteile mit gleichen Bezugsziffern dargestellt.

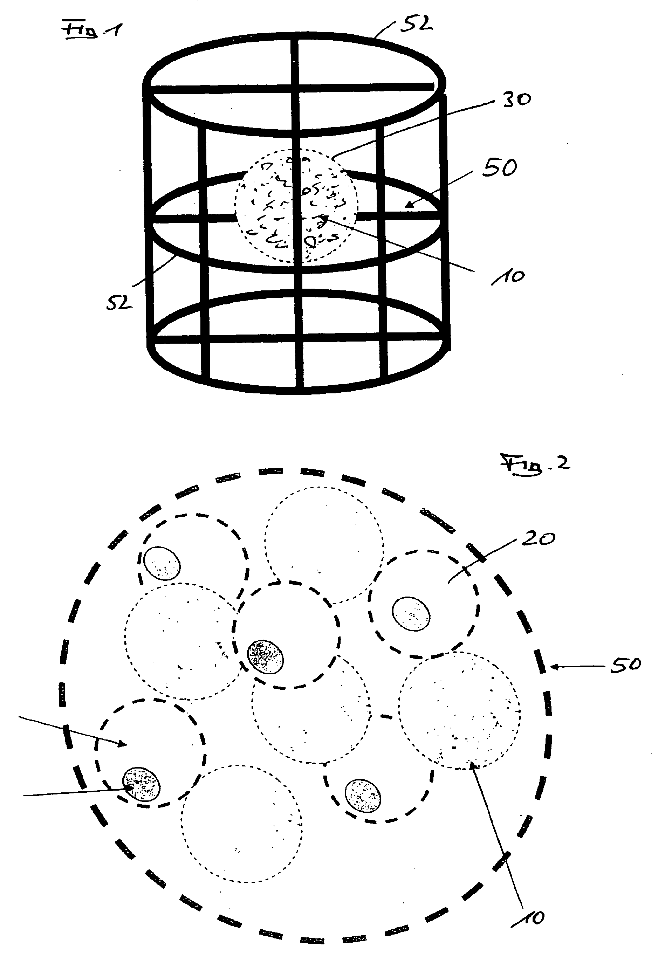

Figur 1 zeigt eine käfigartige Aufnahme 50. Die Aufnahme 50 weist eine gedachte zylindrische Umfangsfläche mit Boden und Deckel auf, wobei Umfangsfläche, Boden und Deckel als Metallgitter mit Stäben 52 gestaltet sind, die eine entsprechende Durchströmbarkeit der Aufnahme 50 erlauben.

In der Aufnahme 50 befindet sich eine kugelartige Umhüllung 30 aus einem feinmaschigen Nylongewebe. In der Umhüllung 30 sind eine Vielzahl von Körpern 10 angeordnet, wobei die Körper 10 aus Aktivkohle-Granalien bestehen.

Die Öffnungsweite der Aufnahme 50 ist so, dass der größte Abstand zwischen benachbarten Stäben 52 kleiner ist als der Durchmesser der Umhüllung 30, so dass die Umhüllung 30 während des bestimmungsgemäßen Einsatzes unverlierbar in der Aufnahme 50 konfektioniert bleibt.

Aus Gründen der besseren Übersichtlichkeit ist in Figur 1 nur eine Umhüllung 30 dargestellt. Üblicherweise sind mehrere Umhüllungen 30 mit Katalysator-Körpern 10 in der Aufnahme 50 vorgesehen, und zwar so, dass in jedem Fall wiederum die vollständige Durchströmbarkeit von Seewasser durch die Aufnahme 50, durch die Umhüllung 30 und durch die Aktivkohle-Körper 10 gewährleistet ist.

Die Aufnahme 50 gemäß Figur 2 besteht aus einer kugelartigen, eigenstabilen Netzstruktur aus Metall, in der eine Vielzahl von Umhüllungen 30 analog Figur 1 und zusätzlich eine Vielzahl von inerten kugelartigen Abstandhaltern 20 angeordnet sind, die innerhalb der Aufnahme 50 frei beweglich sind. Dabei bestehen die Abstandhalter 20 aus Kunststoffbällen.

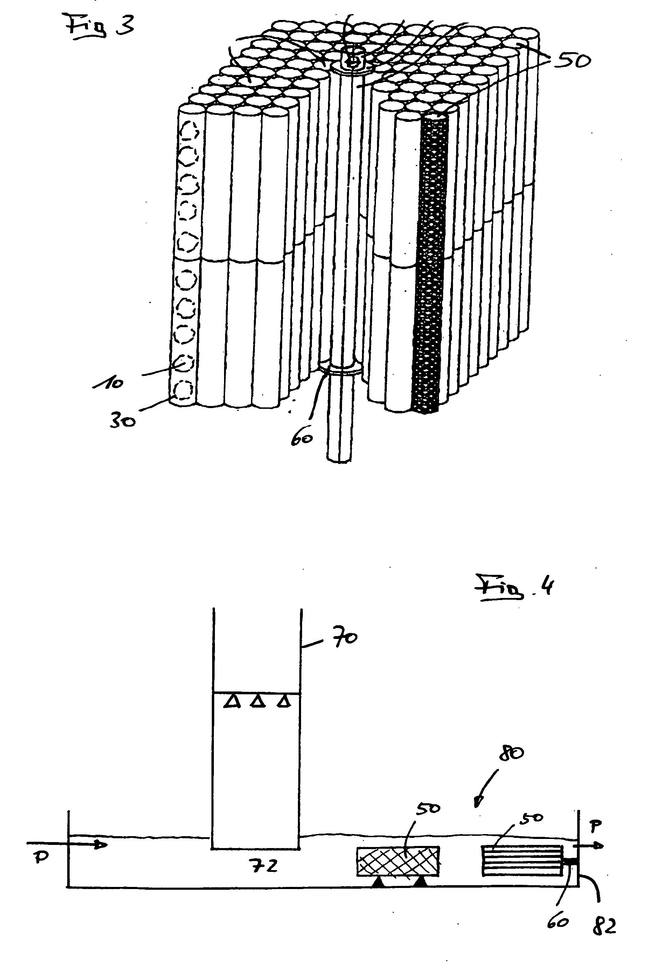

In Figur 3 ist ein kompletter Einbausatz dargestellt, der aus einer Vielzahl von Aufnahmen 50 besteht, die hier jeweils als Netzrohre gestaltet und miteinander verbunden sind. Aufgrund der netzartigen Oberfläche der Aufnahmen 50 ergibt sich bereits eine vollständige Durchströmbarkeit des dargestellten Einbausatzes in allen Richtungen des Koordinatensystems.

Innerhalb jeder Aufnahme 50 sind Umhüllungen 30 mit Körpern 10 analog Figur 1 angeordnet, wie schematisch am linken vorderen Netzrohr angedeutet, wobei jede kugelartige Umhüllung 30 im Abstand zur benachbarten Umhüllung 30 steht und an der netzartigen Zylinderfläche der korrespondierenden Aufnahme 50 befestigt (angenäht) ist.

Mittig innerhalb des Einbausatzes ist ein Befestigungselement 60 zu erkennen, welches dazu dient, den kompletten Einbausatz in einem Belüftungsbecken einer Rauchgasreinigungsanlage zu befestigen.

Figur 4 zeigt wiederum stark schematisiert eine Seewasser-Rauchgasentschwefelungsanlage mit einem so genannten Waschturm 70 und einem unterhalb des Waschturms 70 angeordneten Sumpfbereich 72, in den das mit dem Rauchgas in Kontakt gebrachte Seewasser aus dem Waschturm 70 fällt, um dann anschließend in Pfeilrichtung P durch einen Seewasserkanal geführt zu werden, der ein Nachbelüftungsbecken 80 umfasst, in dem hier - schematisch - zwei Einbausätze der erfindungsgemäßen Art angeordnet sind, und zwar ein in Strömungsrichtung erster Einbausatz, der aus einer Aufnahme 50 gemäß Figur 1 besteht, in der eine Vielzahl von Umhüllungen 30 mit Aktivkohle-Körpern 10 angeordnet sind. Dabei erstreckt sich die Aufnahme 50 faktisch über die gesamte Breite des Belüftungsbeckens 80 (senkrecht zur Strömungsrichtung P betrachtet) und über ca. 90 % der Wasserhöhe.

Der in Strömungsrichtung nachgeschaltete Einbausatz entspricht konstruktiv der Ausführungsform nach Figur 3, jedoch in einer um 90° versetzten Anordnung, so dass der Befestigungsteil 60 horizontal verläuft und an einer Wand 82 des Belüftungsbeckens 80 befestigt ist. Daraus folgt, dass auch die einzelnen Netzrohre (Aufnahmen 50) so angeordnet sind, dass sie in Axialrichtung vom Seewasser durchströmt werden. Bezüglich der Dimensionierung des Einbausatzes gilt das zu dem ersten Einbausatz Gesagte entsprechend.

Die Anordnung einer oder mehrerer Beschleuniger-Einheiten der erfindungsgemäßen Art in ein Nachbelüftungsbecken ermöglicht es, die Bauform des Beckens deutlich zu reduzieren und/oder auf eine separate Seewasserzugabe (Zugabe von frischem Seewasser) in den Sumpfbereich 72 unterhalb des Waschturms 70 zu verzichten.

Die Beschleuniger-Einheit ist weitestgehend wartungsfrei.

## Patentansprüche

1. SO₃²⁻/SO₄²⁻-Oxidations-Beschleuniger-Einheit in Seewasser von Rauchgasentschwefelungsanlagen, mit folgenden Merkmalen:
a) der Beschleuniger ist in Form mindestens eines dreidimensionalen, vom Seewasser durchströmbaren Körpers (10) in einer Größe > 0,5 cm³ gestaltet,
b) der mindestens eine Körper (10) ist in einer vom Seewasser durchströmbaren Umhüllung (30) konfektioniert,
c) Körper (10) und Umhüllung (30) sind so gestaltet sind, dass der mindestens eine Körper (10) während seiner bestimmungsgemäßen Durchströmung von Seewasser ganz überwiegend in der Umhüllung (30) verbleibt,
d) mehrere Umhüllungen (30) mit den darin konfektionierten Körpern (10) sind in einer gemeinsamen, vom Seewasser in allen Richtungen des Koordinatensystems durchströmbaren Aufnahme (50) so angeordnet, dass die Umhüllungen (30) während der bestimmungsgemäßen Durchströmung der Beschleuniger-Einheit mit Seewasser ganz überwiegend in der Aufnahme (50) verbleiben.

2. Beschleuniger-Einheit nach Anspruch 1, deren Umhüllung (30) mindestens eine der folgenden Konfektionierungen aufweist: Gewebe, Gewirke, Netz, Gitter, Membran.

3. Beschleuniger-Einheit nach Anspruch 1, deren Umhüllung (30) mindestens eine der folgenden Formgebungen aufweist: Kugel, Pyramide, Kubus, Rohr, Sack.

4. Beschleuniger-Einheit nach Anspruch 1, deren Umhüllung (30) aus mindestens einem der folgenden Werkstoffe besteht: Metall, Kunststoff.

5. Beschleuniger-Einheit nach Anspruch 1, deren Körper (10) mindestens eine der folgenden äußeren Formgebungen aufweist: Kugel, Pellet, Pyramide, Granalie, Stab, Ei, Stern.

6. Beschleuniger-Einheit nach Anspruch 1, deren Körper (10) zu über 50 Volumen-Prozent aus Aktivkohle besteht.

7. Beschleuniger-Einheit nach Anspruch 1, bei der die Aufnahme (50) mindestens eine der folgenden Konfektionierungen aufweist: Gewebe, Gewirken, Netz, Gitter, Blech mit Durchströmungsöffnungen.

8. Beschleuniger-Einheit nach Anspruch 1, bei der die Aufnahme (50) mindestens eine der folgenden Formgebungen aufweist: Kugel, Kubus, Rohr, Zylinder, Sack.

9. Beschleuniger-Einheit nach Anspruch 1, deren Aufnahme (50) aus mindestens einem der folgenden Werkstoffe besteht: Metall, Kunststoff.

10. Beschleuniger-Einheit nach Anspruch 1, deren Aufnahme (50) neben den Umhüllungen (30) und den Körpern (10) mindestens eine Einrichtung (20) enthält, die benachbarte Umhüllungen (30) auf Abstand hält.

11. Beschleuniger-Einheit nach Anspruch 10, bei der die Einrichtung (20) aus mindestens einem dreidimensionalen Element besteht, das gegenüber Seewasser inert ist.

12. Beschleuniger-Einheit nach Anspruch 1, bei der mehrere Aufnahmen (50) zu einem Einbausatz konfektioniert sind.

## Claims

1. A SO₃²⁻/SO₄²⁻ oxidation accelerator unit in seawater from flue gas desulphurisation plants, said unit comprising the following features:
a) the accelerator is designed in the form of at least one three-dimensional body (10) measuring > 0.5 cm³ and through which seawater can flow,
b) the at least one body (10) is packed in a casing (30) through which seawater can flow,
c) the body (10) and casing (30) are designed in such a way that the at least one body (10) remains quite predominantly in the casing (30) when the seawater flows through it as intended,
d) a plurality of casings (30) comprising the bodies (10) packed therein is arranged in a common receptacle (50) through which seawater can flow in all directions of the coordinate system, in such a way that the casings (30) remain quite predominantly in the receptacle (50) when seawater flows through the accelerator unit as intended.

2. The accelerator unit according to claim 1, of which the casing (30) comprises at least one of the following packings: woven fabric, knitted fabric, netting, mesh, membrane.

3. The accelerator unit according to claim 1, of which the casing (30) comprises at least one of the following shapes: sphere, pyramid, cube, tube, bag.

4. The accelerator unit according to claim 1, of which the casing (30) consists of at least one of the following materials: metal, plastic.

5. The accelerator unit according to claim 1, of which the body (10) comprises at least one of the following outer shapes: sphere, pellet, pyramid, granule, bar, oval, star.

6. The accelerator unit according to claim 1, of which the body (10) consists of more than 50 % by volume of activated carbon.

7. The accelerator unit according to claim 1, wherein the receptacle (50) comprises at least one of the following packings: woven fabric, knitted fabrics, netting, mesh, sheet metal comprising throughflow openings.

8. The accelerator unit according to claim 1, wherein the receptacle (50) comprises at least one of the following shapes: sphere, cube, tube, cylinder, bag.

9. The accelerator unit according to claim 1, of which the receptacle (50) consists of at least one of the following materials: metal, plastic.

10. The accelerator unit according to claim 1, of which the receptacle (50), in addition to the casings (30) and the bodies (10), contains at least one device (20) which keeps the adjacent casings (30) spaced apart.

11. The accelerator unit according to claim 10, wherein the device (20) consists of at least one three-dimensional element which is inert in seawater.

12. The accelerator unit according to claim 1, wherein the plurality of receptacles (50) is packed to form an installation kit.

## Revendications

1. Unité d'accélérateur d'oxydation SO₃²⁻/SO₄²⁻ d'installations de désulfuration des gaz de fumée, avec les attributs suivants :
a) l'accélérateur est conçu sous la forme d'au moins un corps tridimensionnel (10) irrigable par l'eau de mer d'une dimension > 0,5 cm³,
b) l'au moins un corps (10) est confectionné dans une enveloppe (30) irrigable par l'eau de mer,
c) le corps et (10) l'enveloppe (30) sont conçus de sorte que pendant son irrigation conforme par l'eau de mer, l'au moins un corps (10) reste en majeure partie dans l'enveloppe (30),
d) plusieurs enveloppes (30) avec les corps (10) confectionnés à l'intérieur sont disposées dans un logement (50) commun, irrigable par l'eau de mer dans toutes les directions du système de coordonnées, de telle sorte que pendant l'irrigation conforme de l'unité d'accélérateur par l'eau de mer, les enveloppes (30) restent en majeure partie dans le logement (50).

2. Unité d'accélérateur selon la revendication 1, dont l'enveloppe (30) présente au moins l'un des conditionnements suivants : tissu, maillage, filet, grille, membrane.

3. Unité d'accélérateur selon la revendication 1, dont l'enveloppe (30) présente au moins l'une des conformations suivantes : sphère, pyramide, cube, tube, sac.

4. Unité d'accélérateur selon la revendication 1, dont l'enveloppe (30) consiste dans au moins l'un des matériaux suivants : métal, matière plastique.

5. Unité d'accélérateur selon la revendication 1, dont le corps (10) présente au moins l'une des conformations suivantes : sphère, boulette, pyramide, grenaille, baguette, oeuf, étoile.

6. Unité d'accélérateur selon la revendication 1, dont le corps (10) consiste à plus de 50 pour cent en volume dans du charbon actif.

7. Unité d'accélérateur selon la revendication 1, sur laquelle le logement (50) présente au moins l'un des conditionnements suivants : tissu, maillages, filet, grille, tôle avec des orifices d'irrigation.

8. Unité d'accélérateur selon la revendication 1, sur laquelle le logement (50) présente au moins l'une des conformations suivantes : sphère, cube, cylindre, sac.

9. Unité d'accélérateur selon la revendication 1, dont le logement (50) consiste dans au moins l'un des matériaux suivants : métal, matière plastique.

10. Unité d'accélérateur selon la revendication 1, dont le logement (50) comprend, hormis les enveloppes (30) et le corps (10) au moins une installation (20) qui maintient à distance les enveloppes (30) voisines.

11. Unité d'accélérateur selon la revendication 10, sur laquelle l'installation (20) consiste dans au moins un élément tridimensionnel, qui est inerte en présence d'eau de mer.

12. Unité d'accélérateur selon la revendication 1, sur laquelle plusieurs logements (50) sont confectionnés en un module à insérer.
